Europäisches Patentamt

(19) **European Patent Office**

**Office européen des brevets**

(11) Publication number: **0 004 459**

**B1**

(12) **EUROPEAN PATENT SPECIFICATION**

(45) Date of publication of patent specification: **02.02.83**

(21) Application number: **79300455.7**

(22) Date of filing: **22.03.79**

(51) Int. Cl.³: **E 04 B 1/60, F 16 B 5/06**

(54) **Improved means for joining panels.**

(30) Priority: **23.03.78 GB 1155378**

(43) Date of publication of application:
**03.10.79 Bulletin 79/20**

(45) Publication of the grant of the patent:
**02.02.83 Bulletin 83/5**

(84) Designated Contracting States:
**BE CH DE FR LU NL**

(56) References cited:
**FR - A - 2 331 672**
**GB - A - 1 353 001**
**GB - A - 1 489 278**
**US - A - 4 019 302**
**US - A - 4 038 791**

(73) Proprietor: **Hugens, Andrew**
**1 Avenues Court Victoria Avenue**
**Hull North Humberside (GB)**

(72) Inventor: **Hugens, Andrew**
**1 Avenues Court Victoria Avenue**
**Hull North Humberside (GB)**

(74) Representative: **Jones, Colin et al,**
**W.P. THOMPSON & CO. Coopers Building Church**
**Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Improved means for joining panels

This invention relates to a device for joining panels.

It has been proposed in GB—A—1 489 278 to provide joining means for joining two panels comprising a pair of strips which are interengageable in a snap fastening manner. In this proposal each strip has a U-shaped channel for receiving an edge of a respective panel.

It has been further proposed in US—A—4 038 791 which describes a light weight greenhouse structure that a glass panel be secured to a frame by means of a snap-on glazing member, a second panel being retained in the frame by a flexible glazing bead.

FR—A—2 331 672 describes a frame for a window of two part construction in which the glass is disposed between the flange of a first profiled member and a second profiled member which engages with the first profiled member.

Notwithstanding these proposals, panels in caravans, boats, agricultural buildings, vehicle buildings and modular building applications have continued to be joined together by the use of screws, rivets and other unsightly methods. The effort involved and time consumed in fixing panels in this way is disadvantageous and costly. It is an object, therefore, of this invention to provide an improved device for joining panels.

In accordance with this invention there is provided a device for joining panels incorporating first and second panel receiving means, the first panel receiving means comprising an extrusion moulded member having a flange which is engageable around an edge of a panel and wherein said panel, in use, is resiliently gripped between the flange and an extrusion moulded gripping member and a second panel being retained by the second panel receiving means characterised in that the first panel receiving means has a first longitudinal groove whose edge remote from the flange is inwardly turned and constitutes a lip and that the extrusion moulded gripping member has a second longitudinal groove adapted to receive the said lip, a first edge arranged to abut against the inside of the first longitudinal groove and a second edge remote from the first edge, for gripping the said panel.

By virtue of this construction, and with the additional use of adhesives, mastics or gaskets as desired, panels may be fixed to one another in a simple, effective and relatively inexpensive manner.

The invention is further described hereinafter, by way of example only, with reference to the accompanying drawings, in which:—

Fig. 1 is a vertical section through one embodiment of this invention which is shown fixing a wall panel to a roof panel at right angles to one another;

Fig. 2 is a vertical section through the same embodiment as illustrated in Fig. 1 in which a wall panel is shown to be perpendicularly fixed to a floor panel;

Fig. 3 is a horizontal section through two panels which are fixed perpendicularly to one another by a second embodiment of this invention;

Fig. 4 is a fragmentary perspective view of an assembly in which the embodiments of Figs. 1 and 2 and Fig. 3 are shown illustrating the mutual interlocking arrangement of the panels, and in the accompanying drawing referenced Fig. 5, which is a vertical section similar to that of Fig. 2 through a further embodiment of the present invention.

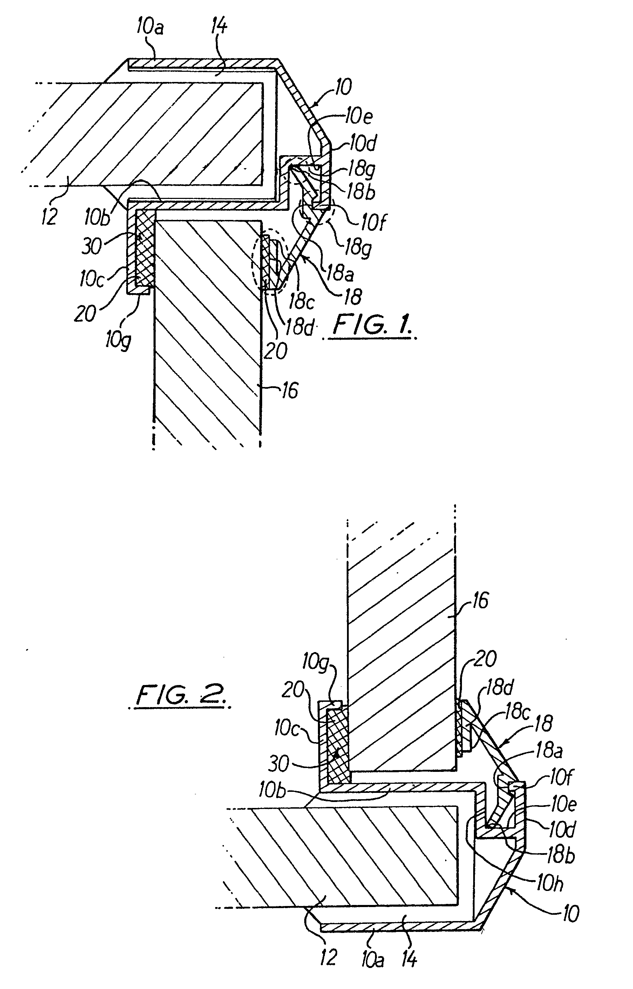

In Figs. 1 and 2 a generally U-shaped section 10 is fitted along the lengths of the panels 12. This section, which is extrusion moulded, is fixed to the panel with adhesive or by means of a gasket 14. Of the arms 10a, 10b of the section 10, one arm 10a lies parallel with the panel 12, separated from it by the gasket or adhesive, while the other arm 10b, which also lies parallel to the panel for a length substantially equal to that of 10a, has a longitudinal flange 10c which extends away from the panel 12 and serves to support a second panel 16, to which the panel 12 is to be fixed. At the end of the flange 10c there is an inwardly turned ledge 10g which is preferably substantially perpendicular to the flange 10c. The function of the ledge is discussed in detail below. In the drawings the longitudinal flanges 10c are substantially perpendicular to the panels 12. However, this is not a necessary feature of this invention and in other embodiments it is preferable if the panel 16 is at some other angle to the panel 12, in which case the flange 10c is angled to arm 10b so that it is in substantially parallel alignment with panel 16 as is the case in Figs. 1 or 2.

The base 10d of section 10 is constructed to form a generally U-shaped longitudinal groove 10e which opens in a direction which is substantially the same as that of the flange 10c. The groove 10e has two sides, the side 10h forming part of the arm 10b of the section 10 while the other is an extended flange of the base 10d and is provided with a lip 10f which is turned across the mouth of the groove 10e.

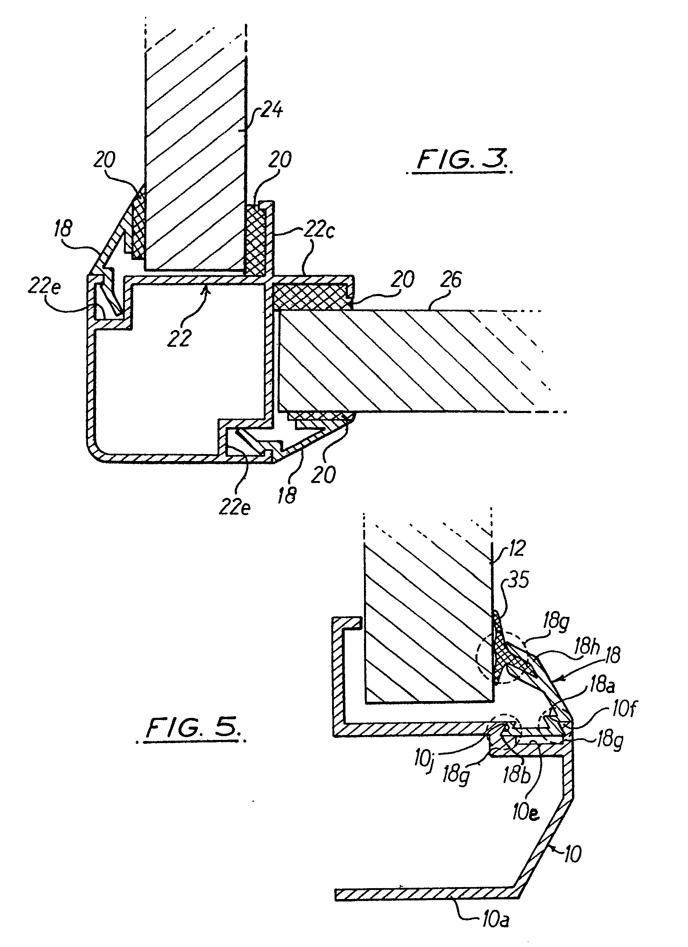

A second section 18 is provided which is constructed and adapted, also by extrusion moulding, to be received within the longitudinal groove 10e and to grip the panel 16 between itself and the flange 10c. This section 18 is spring fitted into the groove and has a small groove 18a which receives the lip 10f of the groove 10e. It also has an edge 18b which is adapted to abut the side wall 10h of the groove 10e when the lip 10f is received within the small groove 18a. The other edge 18c of the spring section 18 is folded inwards so as to provide a flat surface 18d for abutment with the panel 16. As a result of the spring section 18 exerting a force in the pressure area 18g, and because the spring section is being permanently compressed, the panel 16 is resiliently gripped between the flange 10c and section 18 with consistant and accurate pressure. A mastic or gasket 20 may be provided between the flange 10c and the panel 16, and/or between the panel and the spring section 18, so as to afford even better grip on the panel and also so as to seal the gap therebetween. In this way it is possible to joint two panels in a simple and efficient manner. The embodiments illustrated are adapted for fixing a wall to a floor or for fixing a ceiling to a wall in a typical building situation. Normally a corner post 22 illustrated in Fig. 3 would be used to fix a wall to a second wall but in either case the embodiments' uses are not restricted solely to their uses as illustrated in the drawings.

The embodiment illustrated in Fig. 3 includes a box section 22 which is adapted to fit in the corner between two panels 24, 26 and is provided in the place of, and which differs from the section 10 of the first embodiment illustrated in Figs. 1 and 2. In this embodiment two spring sections 18, two flanges 22c and two longitudinal grooves 22e are provided which are equivalent, and have substantially the same function as those of the first embodiment indicated by the reference numerals 18, 10c and 10e respectively.

Similarly to the first embodiment, a panel 26 is resiliently gripped and held between the flange 22c and the spring section 18, mastic or a gasket 20 separating the latter members from the panel. A similar arrangement allows the panel 24 to be fixed with respect to the panel 26, and at a predetermined angle to it, which is, in this embodiment, a right angle.

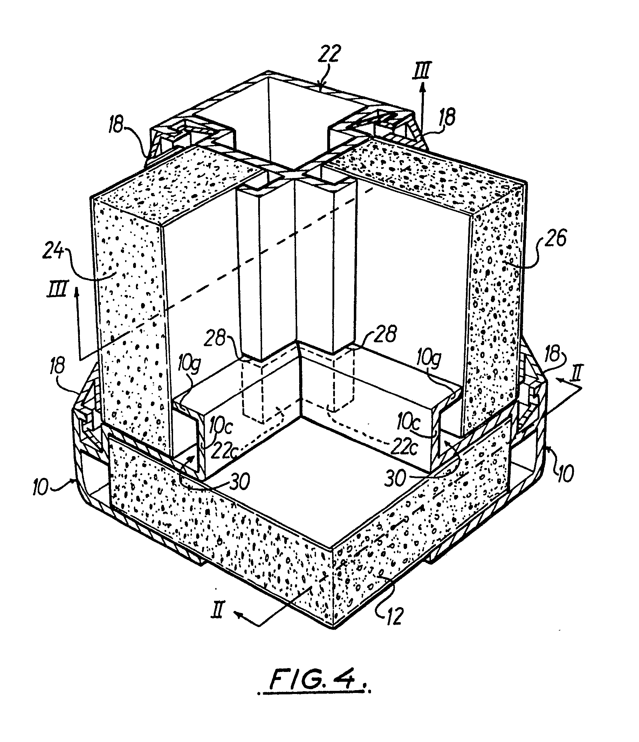

Fig. 4 illustrates a typical situation in which three panels 12, 24 and 26 are fixed at mutual right angles to one another by two sections 10 and a box section 22. This Figure makes clear the necessity for the ledges 10g to abut the panels 24, 26 and keep the arms 10c away from the panels. Thus there is a gap 30 provided which is large enough to receive the arms 22c of the box section 22 in the corner region where the three sections meet. To allow the continued functioning of the ledges 10g, grooves 28 are cut in the arms 22c. These grooves then accommodate the ledges 10g so that the three panels are firmly held in their relative juxtaposition which, in the case illustrated in Fig. 4, is substantially a mutually perpendicular arrangement. Nevertheless, although this facility is an important feature of the invention, its scope is not restricted to perpendicular arrangement of the panels, since it is possible that other arrangements may occasionally be employed in which the angles between panels are not right angles. In these cases appropriate mitring of the ends of the sections 10, 22, shaping of the various flanges 10c, 22c and longitudinal grooves 10e, 22e and cutting of the grooves 28 allows these different angles to be attained.

Finally, an added advantage of this method of joining panels is that it is extremely easy to waterproof the joints. The orientation of the sections as indicated in the drawings lends itself to efficient sealing, particularly with the aid of mastics or adhesive. Furthermore, the groove 10e, with the orientation, as indicated in Fig. 2, acts as a gutter so as to drain water away.

In the embodiment illustrated in Fig. 5 like parts have been given the same reference numerals and which parts accomplish the same functions as in the previous embodiment. However, in this embodiment the spring section 18 has a different shape whereby not only does it hold the panel 12 in place but it is also rendered more difficult to remove and hence more resistant to tampering.

This is because the edge of the spring section not only presses against the side of the longitudinal groove 10e but also engages with a preferably correspondingly shaped recess 10j whereby the spring section is held in place to greater effect than in the earlier embodiments.

The flat 18d of the previous embodiments has also been changed in that the spring section is provided with a forked portion 18h for receiving a flange of a rubber-like gasket 35 which is preferably constructed from neoprene and which provides greater flexibility to the system than in the first embodiments, and takes over the function of the flat 18d.

**Claims**

1. A device for joining panels incorporating first and second panel receiving means, the first panel receiving means comprising an extrusion moulded member (10, 22) having a flange (10c, 22c) which is engageable around an edge of a panel (16, 22) and wherein said panel, in use, is resiliently gripped between the flange (10c, 22c) and an extrusion moulded gripping member (18), and a second panel (12) being retained by the second panel receiving means (10a, 10b) characterised in that the first panel receiving means has a first longitudinal groove (10e, 22e) whose edge remote from the flange (10c, 22c) is inwardly turned and constitutes a lip (10f), and that the extrusion moulded gripping member (18) has a second longitudinal groove (18a) adapted to receive the said lip (10f), a first edge (18b) arranged to abut against the inside (10h) of the first longitudinal groove (10e, 22e) and a second edge (18c), remote from the first edge, for gripping the said panel.

2. A device as claimed in claim 1, in which the extrusion moulded gripping member (18) is provided with a flat surface (18d) on its second edge (18c) for abutment with the panel.

3. A device as claimed in claim 1 or 2, in which the second panel receiving means comprises a substantially U-shaped section for receiving and holding said second panel.

4. A device as claimed in claim 3, in which one arm (10*b*) of the substantially U-shaped section is formed by a connection between the flange (10*c*) and the first longitudinal groove (10*e*) and in which at least a part of the base (10*h*) of the substantially U-shaped section is formed by said first longitudinal groove (10*e*).

5. A device as claimed in any of claims 1 or 2, in which the second panel receiving means which forms a part of the device, has both a second flange (22*c*) which is engageable around an edge of said second panel and a third longitudinal groove (22*e*) having one edge remote from the second flange (22*c*) which is inwardly turned and constitutes a lip and a second extrusion moulded gripping member (18) which has a fourth longitudinal groove, which is adapted to receive said lip of the third longitudinal groove, a first edge, arranged to abut against the inside of the third longitudinal groove, and a second edge remote from its first edge, said second panel, in use, being resiliently gripped between the second flange (22*c*) and the second edge of the second gripping member.

6. A device as claimed in any preceding claim in which the first and second panel receiving means are disposed substantially perpendicular with respect to one another.

7. A device as claimed in any preceding claim in which a mastic, an adhesive, a gasket (20) of any combination thereof is interposed between the device and the or each panel to be held by said device.

8. An assembly comprising two of said devices as claimed in any preceding claim on which the or one of the flanges (10*c*, 22*c*) of a first of said devices has a slot (28) for accommodating the flange, or one of the flanges, of a second of said devices for retaining said devices at a predetermined angle to one another.

9. An assembly as claimed in claim 8, in which said first device is a device as claimed in claim 5 or claim 6 or 7 when appendant to claim 5 and both flanges (22*c*) thereof have slots (28) one for accommodating the flange (10*c*) or one of the flanges (22*c*) of the second device, and the other one for accommodating the flange (10*c*) or one of the flanges (22*c*) of a third device, which third device is as claimed in any of claims 1 to 7, so as to retain said devices at a predetermined angle to one another.

10. A device as claimed in any preceding claim in which the extrusion moulded gripping member is adapted to mount a resilient gasket for abutment with the panel.

11. A device as claimed in claim 10 in which the extrusion moulded gripping member is provided with a forked mouth (18*h*) on its second edge for receiving a flange of the resilient gasket (35).

12. A device as claimed in any preceding claim in which the extrusion moulded member (10) is provided with a longitudinal recess (10*j*) in its longitudinal groove (10*e*) which recess is provided for accommodating the first edge (18*b*) of the extrusion moulded gripping member and for holding same in place.

13. A device as claimed in any preceding claim in which at least one of the extrusion moulded gripping members (18) is resilient.

**Patentansprüche**

1. Vorrichtung zum Verbinden von Platten mit einer ersten und einer zweiten Plattenaufnahmeeinrichtung, von denen die erste ein stranggepreßtes Element (10, 22) mit einem Flansch (10*c*, 22*c*) aufwesit, der um einen Rand einer Platte (16, 22) herum in Eingriff bringbar ist, wobei die eingesetzte Platte zwischen dem Flansch (10*c*, 22*c*) und einem stranggepreßten Greifteil (18) federnd gefaßt ist, und wobei eine zweite Platte (12) von der zweiten Plattenaufnahmeeinrichtung (10*a*, 10*b*) gehalten ist, dadurch gekennzeichnet, daß die erste Plattenaufnahmeeinrichtung eine erste Längsnut (10*e*, 22*e*) aufweist, deren vom Flansch (10*c*, 22*c*) entfernt liegender Rand nach innen gerichtet ist und eine Randleiste (10*f*) bildet, und daß das stranggepreßte Greifteil (18) eine zweite Längsnut (18*a*) für die Aufnahme der Randleiste (10*f*) aufweist, wobei ein erster Rand (18*b*) so angeordnet ist, daß er an der Innenseite (10*h*) der ersten Längsnut (10*e*, 22*e*) anliegt und eine zweiter Rand (18*c*), der vom ersten Rand entfernt liegt, für das Angreifen an der Tafel angeordnet ist.

2. Vorrichtung nach Anspruch 1, bei welcher das stranggepreßte Greifteil (18) mit einer ebenen Oberfläche (18*d*) an seinem zweiten Rand (18*c*) für das Anliegen an der Platte versehen ist.

3. Vorrichtung nach Anspruch 1 oder 2, bei welcher die zweite Plattenaufnahmeeinrichtung einen im wesentlichen U-förmigen Abschnitt für die Aufnahme und das Halten der zweiten Platte aufweist.

4. Vorrichtung nach Anspruch 3, bei welcher ein Arm (10*b*) des im wesentlichen U-förmigen Abschnitts von einer Verbindung zwischen dem Flansch (10*c*) und der ersten Längsnut (10*e*) gebildet ist, und bei welcher wenigstens ein Teil der Basis (10*h*) des im wesentlichen U-förmigen Abschnitts von der ersten Längsnut (10*e*) gebildet ist.

5. Vorrichtung nach Anspruch 1 oder 2, bei welcher die zweite Plattenaufnahmeeinrichtung, welche einen Teil der Vorrichtung bildet, sowohl einen zweiten Flansch (22*c*), der um einen Rand der zweiten Platte herum in Eingriff bringbar ist, als auch eine dritte Längsnut (22*e*), deren einer von dem zweiten Flansch (22*c*) entfernt liegender Rand nach innen gerichtet ist und eine Randleist bildet, sowie auch ein zweites stranggepreßtes Greifteil (18) aufweist, welches eine vierte Längsnut für die Aufnahme der Randleiste der dritten Längsnut, einen ersten Rand, der für das Anliegen an der Innenseite der dritten Längsnut angeordnet ist, und einen zweiten vom ersten Rand entfernt liegenden Rand hat, wobei die zweite eingesetzt Platte zwischen dem zweiten Flansch (22c) und dem zweiten Rand des zweiten Greifteils federnd gefaßt ist.

6. Vorrichtung nach einem der vorhergehenden Ansprüche, bei welcher die erste und die zweite Plattenaufnahmeeinrichtung im wesentlichen senkrecht zueinander angeordnet sind.

7. Vorrichtung nach einem der vorhergehenden Ansprüche, bei welcher zwischen der Vorrichtung und der oder jeder von der Vorrichtung zu haltenden Platte Kitt, ein Klebstoff, eine Dichtung (20) oder irgendeine Kombination davon angeordnet ist.

8. Anordnung mit zwei Vorrichtungen nach einem der vorhergehenden Ansprüche, bei welcher der oder einer der Flansche (10c, 22c) einer ersten der Vorrichtungen einen Schlitz (28) für die Aufnahme des Flansches oder eines der Flansche der zweiten der Vorrichtungen zum Halten der Vorrichtungen in einem vorher festgelegten Winkel zueinander aufweist.

9. Anordnung nach Anspruch 8, bei welcher die erste Vorrichtung eine Vorrichtung nach Anspruch 5 oder nach Anspruch 6 oder 7, wenn diese mit Anspruch 5 verbunden sind, ist, und ihre beiden Flansche (22c) Schlitze (28) aufweisen, nämlich einen für die Aufnahme des Flansches (10c) oder einen der flansche (22c) der zweiten Vorrichtung und den anderen für die Aufnahme des Flansches (10c) oder eines der Flansche (22c) einer dritten Vorrichtung nach einem der Ansprüche 1 bis 7, so daß die Vorrichtungen in einem vorher festgelegten Winkel zueinander gehalten sind.

10. Vorrichtung nach einem der vorhergehenden Ansprüche, bei welcher das stranggepeßte Greifteil zur Halterung einer elastischen Dichtung für das Anliegen an der Platte angepaßt ist.

11. Vorrichtung nach Anspruch 10, bei welcher das stranggepreßte Greifteil mit einer gegabelten Öffnung (18h) an seinem zweiten Rand für die Aufnahme eines Flansches der elastischen Dichtung (35) versehen ist.

12. Vorrichtung nach einem der vorhergehenden Ansprüche, bei welcher das Stranggepreßte Element (10) mit einer Längsaussparung (10j) in seiner Längsnut (10e) versehen ist, die für die Aufnahme des ersten Randes (18b) des stranggepreßten Greifteils und für dessen Halten an Ort und Stelle vorgesehen ist.

13. Vorrichtung nach einem der vorhergehenden Ansprüche, bei welcher wenigstens eines der stranggepreßten Greifteile federnd elastisch ist.

**Revendications**

1. Dispositif d'assemblage de panneaux comportant un premier et un deuxième moyens de réception de panneau, le premier comprenant un élément extrudé (10, 22) comportant une aile (10c, 22c) qui peut être engagée autour d'un bord d'un panneau (16, 22), et ce panneau, en place, étant serré élastiquement entre l'aile (10c, 22c) et un élément de serrage extrudé (18), et le deuxième moyen de réception de panneau (10a, 10b) retenant un deuxième panneau (12), caractérisé par le fait que le premier moyen de réception de panneau présente une première gorge longitudinale (10e, 22e) dont le bord opposé à l'aile (10c, 22c) est dirigé vers l'intérieur et constitue une lèvre (10f), et que l'élément extrudé de serrage (18) présente une deuxième gorge longitudinale (18a) destinée à recevoir ladite lèvre (10f), um premier bord (18b) destiné à s'appuyer contre l'intérieur (10h) de la première gorge longitudinale (10e, 22e) et un deuxième bord (18c), opposé au premier, destiné à serrer ledit panneau.

2. Dispositif selon la revendication 1, caractérisé par le fait que l'élément extrudé de serrage (18) est pourvu sur son deuxième bord (18c) d'une surface plane (18d) destinée à s'appuyer contre le panneau.

3. Dispositif selon l'une des revendications 1 et 2, caractérisé par le fait que le deuxième moyen de réception de panneau comprend un profilé de forme générale en U destiné à recevoir et tenir le deuxième panneau.

4. Dispositif selon la revendication 3, caractérisé par le fait qu'une branche (10b) du profilé en U est formée par une liaison entre l'aile (10c) et la première gorge longitudinale (10e) et qu'au moins une partie de l'âme (10h) du profilé en U est formée par la première gorge longitudinale (10e).

5. Dispositif selon l'une des revendications 1 et 2, caractérisé par le fait que le deuxième moyen de réception de panneau qui fait partie du dispositif comporte à la fois une deuxième aile (22c), qui peut être engagée autour d'un bord du deuxième panneau, et une troisième gorge longitudinale (22e) ayant un bord opposé à la deuxième aile (22c) qui est dirigé vers l'intérieur et constitue une lèvre, et un deuxième élément extrudé de serrage (18), qui présente une quatrième gorge longitudinale destinée à recevoir la lèvre de la troisième gorge longitudinale, un premier bord destiné à s'appuyer contre l'intérieur de la troisième gorge longitudinale et un deuxième bord opposé au premier, le deuxième panneau, en place, étant serré élastiquement entre la deuxième aile (22c) et le deuxième bord du deuxième élément de serrage.

6. Dispositif selon l'une des revendications précédentes, caractérisé par le fait que le premier et le deuxième moyens de réception de panneau sont disposés à peu près perpendiculairement.

7. Dispositif selon l'une des revendications, précédentes, caractérisé par le fait qu'un mastic, une colle, une garniture (20) ou une combinaison quelconque de ceux-ci est placé entre le dispositif et le ou chaque panneau destiné à être tenu par le dispositif.

8. Ensemble comprenant deux dispositifs selon l'une des revendications précédentes, caractérisé par le fait que l'aile ou une des ailes (10c, 22c) d'un premier dispositif présente une fente (28) destinée à recevoir l'aile ou une des ailes d'un deuxième dispositif pour le maintien de ces dispositifs à un angle déterminé l'un de l'autre.

9. Ensemble selon la revendication 8, caractérisé par le fait que le premier dispositif est un dispositif selon la revendication 5 ou l'une des revendications 6 et 7 quand celle-ci est adjointe à la revendication 5, et que ses deux ailes (22c) présentent des fentes (28), l'une destinée à recevoir l'aile (10c) ou une des ailes (22c) du deuxième dispositif et l'autre destinée à recevoir l'aile (10c) ou une des ailes (22c) d'un troisième dispositif, ce troisième dispositif étant un dispositif selon l'une des revendications 1 à 7, de façon à maintenir ces dispositifs à un angle déterminé les uns des autres.

10. Dispositif selon l'une des revendications précédentes, caractérisé par le fait que l'élément de serrage extrudé est conçu pour recevoir une garniture élastique d'appui contre le panneau.

11. Dispositif selon la revendication 10, caractérisé par le fait que l'élément de serrage extrudé est pourvu sur son deuxième bord d'une gueule fourchue (18h) destinée à recevoir une aile de la garniture élastique (35).

12. Dispositif selon l'une des revendications précédentes, caractérisé par le fait que l'élément extrudé (10) est pourvu dans sa gorge longitudinale (10e) d'un creux longitudinal (10j) destiné à recevoir le premier bord (18b) de l'élément de serrage extrudé et à maintenir celui-ci en place.

13. Dispositif selon l'une des revendications précédentes, caractérisé par le fait qu'au moins un des éléments de serrage extrudés (18) est élastique.

FIG. 1.

FIG. 2.

_FIG. 3._

_FIG. 5._

FIG. 4.